# EUROPÄISCHE PATENTSCHRIFT

(11) **EP 0 728 515 B1**
(45) Veröffentlichungstag und Bekanntmachung des Hinweises auf die Patenterteilung: **10.11.1999**
(21) Anmeldenummer: 96102479.1
(22) Anmeldetag: 19.02.1996
(51) Int. Cl.: B01D 53/047

(54) **Druckwechseladsorptionsanlage**
Pressure swing adsorption device
Dispositif d'adsorption à pression alternée

(30) Priorität: 27.02.1995 DE 19506760
(43) Veröffentlichungstag der Anmeldung: 28.08.1996
(73) Patentinhaber: Linde Aktiengesellschaft, 65189 Wiesbaden (DE)
(72) Erfinder: Benkmann, Christian, Dipl.-Ing., D-82166 Gräfelfing (DE)
(74) Vertreter: Zahn, Christoph

(56) Entgegenhaltungen:
- EP-A- 0 219 103
- DE-A- 3 346 032

## Beschreibung

Die Erfindung betrifft eine Druckwechseladsorptionsanlage zum Durchführen eines kontinuierlichen Druckwechseladsorptionsverfahrens, mit mindestens zwei phasenverschoben arbeitenden Adsorptionseinheiten, wobei jede Adsorptionseinheit abwechselnd in den Arbeitszuständen "Adsorption" und "Desorption" mit einer oder mehreren zwischengeschalteten Druckausgleichs- und/oder Spülphasen betrieben wird.

Eine Druckwechseladsorptionsanlage gemäß dem Oberbegriff des Anspruchs 1 ist z. B. aus der DE-A-33 46 032 bekannt. Hierbei ist jeder der dargestellten Adsorber über ein Regelventil mit einer der Druckausgleichs- und/oder Spülleitungen verbunden. Um die Druckausgleichs- und/oder Spülvorgänge kontrollieren zu können, müssen Regelventile verwendet werden, die von einer entsprechenden Ventilsteuerung angesteuert werden. An derartige Regelventile werden jedoch bezüglich Dichtheit, schnelles Öffnen, schnelles Schließen, etc., Anforderungen gestellt, wie sie für ein Standardventil bzw. ein sogenanntes Auf-Zu-Ventil nicht gelten. Der technische Aufwand und die Kosten für Regelventile sind daher im Gegensatz zu einem herkömmlichen Auf-Zu-Ventil vergleichsweise hoch. Zudem sind derartige Regelventile störanfälliger, da ein Fehler bei einer der zu einem Regelventil gehörenden Komponenten, wie Antrieb, Stellungsregler, pneumatischer Verstärker, etc., oftmals zum vollständigen Ausfall des Regelventiles führt. Andererseits ist es jedoch nicht möglich, gänzlich auf Regelventile und damit auf geregelte Druckausgleiche zu verzichten, da dies einerseits negative Auswirkungen auf das Druckwechseladsorptionsverfahren selbst hätte und andererseits die Vergrößerung einiger Anlagenteile, die in diesem Falle hohen Strömungsgeschwindigkeitsspitzen Stand halten müßten, notwendig machen würde.

Aus der EP-A-0 219 103 ist ein Oxidationsverfahren von kohlenstoffhaltigem Material bekannt, bei dem das CO₂-, CO- und nichtreagierte Rest-O₂-enthaltende Abgas mittels eines nachgeschalteten Druckwechseladsorptionsverfahrens von CO_{X}-Komponenten gereinigt wird. Das Druckwechseladsorptionsverfahren weist drei parallel angeordnete Adsorber auf. Das Wiederaufdrücken eines zuvor gespülten Adsorbers erfolgt hierbei mit einem Teilstrom des aus einem der anderen Adsorber abgezogenen Produktstromes. Zu diesem Zwecke weist die vorgesehene Druckausgleichsleitung entweder pro Adsorber ein Regelventil auf - erste Verfahrensvariante - oder sie ist über ein Regelventil mit der Produktleitung verbunden - zweite Verfahrensvariante -, wobei im Falle der zweiten Verfahrensvariante die Regelventile der ersten Verfahrensvariante durch Auf-Zu-Ventile ersetzt werden können.

Aufgabe der vorliegenden Erfindung ist es, die genannten Nachteile des Standes der Technik zu vermeiden.

Dies wird erfindungsgemäß dadurch erreicht, daß jeder der Adsorptionseinheiten ein eigenes Regelventil, das in der zu den Druckausgleichs- und/oder Spülleitungen führenden Sammelleitung angeordnet ist, zugeordnet ist, während diejenigen Ventile, die die Sammelleitung mit den einzelnen Druckausgleichs- und/oder Spülleitungen verbinden, als sogenannte Auf-Zu-Ventile ausgelegt sind.

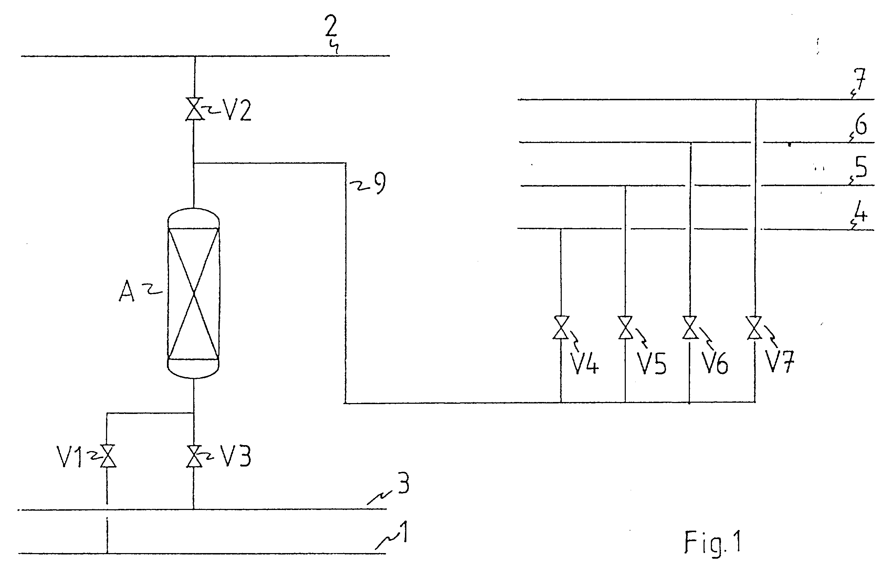

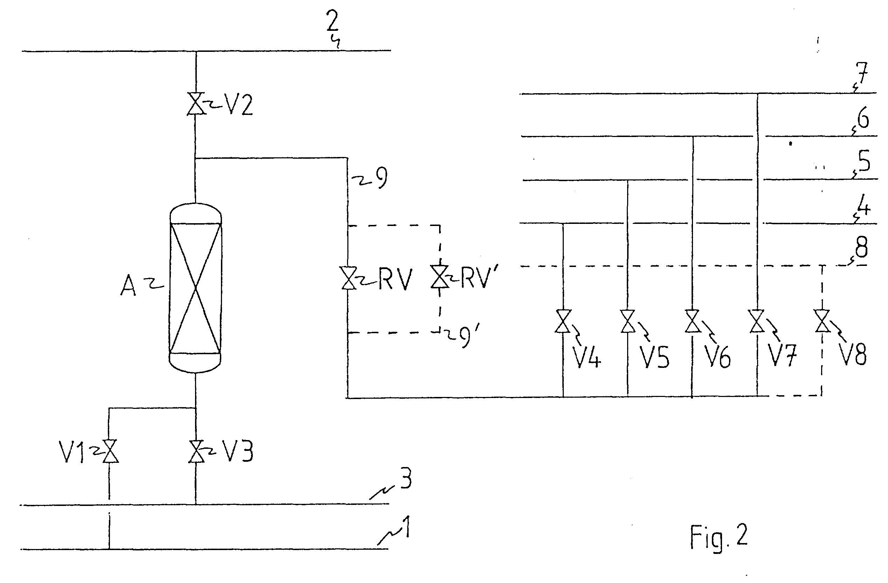

Die Erfindung sowie weitere Ausgestaltungen davon seien im folgenden anhand der Figuren 1 und 2 näher erläutert. Figur 1 zeigt hierbei einen Teil einer Druckwechseladsorptionsanlage, wie sie z.B. in der bereits genannten DE-OS 33 46 032 beschrieben ist. Figur 2 hingegen zeigt die erfindungsgemäße Druckwechseladsorptionsanlage selbst.

Zur Erläuterung des erfindungswesentlichen Gedankens ist die Darstellung eines einzelnen Adsorbers A ausreichend. Bei einer Druckwechseladsorptionsanlage gemäß dem Stand der Technik wird dem Adsorber A in der Druckaufbau- und/oder Adsorptionsphase, bei geöffnetem Ventil V1, über die Rohgasleitung 1 das zu zerlegende bzw. zu reinigende Gasgemisch zugeführt. Während der Adsorptionsphase ist Ventil V2 geöffnet, so daß über die Produktleitung 2 der nicht am Adsorptionsmittel adsorbierte Teil des dem Adsorber A zugeführten Rohgases abgezogen wird. Beinhaltet das Adsorptionsverfahren eine Gegenstromentspannung und/oder -spülung, so kann das dabei über das Eintrittsende des Adsorbers A entweichende Gas, bei geöffnetem Ventil V3, über die Restgasleitung 3 abgezogen werden. Es ist selbstverständlich auch denkbar, daß der am Adsorptionsmittel adsorbierte Teil des dem Adsorber A zugeführten Rohgases das zu gewinnende Produkt darstellt. In diesem Fall entweicht während der Druckaufbau- und/oder Adsorptionsphase über die Leitung 2 das Rest- bzw. Nebenproduktgas. Nach Beendigung der Adsorptionsphase wird dann über die Leitung 3 das Produktgas gewonnen. Zum Durchführen der Druckausgleiche und/oder Spülvorgänge zwischen den einzelnen Adsorbern ist das Austrittsende des Adsorbers A über eine Sammelleitung 9 mit vier Druckausgleichs- bzw. Spülleitungen 4 bis 7 verbunden. Diese Druckausgleichs- bzw. Spülleitungen 4 bis 7 sind mittels der Regelventile V4 bis V7 von der Sammelleitung 9 abgetrennt. Während für die Ventile V1 bis V3 sogenannte Auf-Zu-Ventile verwendet werden, sind gemäß dem Stand der Technik für die Ventile V4 bis V7 Regelventile vorgesehen. Dies ist notwendig, da, wie bereits eingangs erwähnt, der zwischen den einzelnen Adsorbem strömende Druckausgleichs- bzw. Spülgasstrom kontrolliert werden soll.

Wie in Figur 2 dargestellt, können die Regelventile V4 bis V7 durch sog. Auf-Zu-Ventile ersetzt werden, da, gemäß der Erfindung, ein zusätzliches Regelventil RV in der Sammelleitung 9 angeordnet wird. Die Regelung der Druckausgleichs- bzw. Spülgasströme erfolgt nunmehr einzig und alleine über dieses in der Sammelleitung 9 angeordnete Regelventil RV. Gemäß einer Ausgestaltung der erfindungsgemäßen Druckwechseladsorptionsanlage kann in einer Bypass-Leitung 9' ein zum Regelventil RV parallel angeordnetes Reserveregelventil RV' angeordnet sein. Dadurch wird auch im Falle des Ausfalls des Regelventils RV ein "Weiterbetreiben" der Druckwechseladsorptionsanlage ermöglicht. Zusätzlich zu dem bereits genannt Druckausgleichs- und/oder Spülleitungen 4 bis 7 ist eine weitere Druckausgleichs- und/oder Spülleitung 8, die über ein weiteres Auf-Zu-Ventil V8 mit der Sammelleitung 9 verbunden ist, dargestellt. Diese zusätzliche Leitung dient als Reserveleitung für eine der Druckausgleichs-und/oder Spülleitung 4 bis 7, die bei einer Fehlfunktion des jeweils zugehörigen Auf-Zu-Ventils V4 bis V7 außer Betrieb genommen werden müßten. Im Vergleich mit einem zum Stand der Technik zählenden Druckwechseladsorptionsverfahren, benötigt das erfindungsgemäße Druckwechseladsorptionsverfahren eine geringfügig größere Anzahl an Ventilen. Da die benötigten Ventile jedoch mit Ausnahme des Regelventils RV in der Sammelleitung 9 herkömmliche Auf-Zu-Ventile sind, kommt es trotz der Tatsache, daß sich die Ventilanzahl erhöht hat, zu einer Verbilligung der gesamten Instrumentierung, da u.a. die Prozeßsteuerung durch den Wegfall der zur Ansteuerung der Regelventile erforderlichen Analogsignale vereinfacht wird. Auf-Zu-Ventile weisen, insbesondere bei größeren Ventilen, wesentlich kürzere Schaltzeiten auf, als dies bei gleich großen Regelyentilen der Fall ist. Dadurch entfallen bisher notwendige Wartezeiten während des Prozeßablaufs. Da diese Wartezeiten, sie betragen etwa 2 bis 6 Sekunden, in der Regel im Bereich von 5 bis 25 % der Taktzeiten, diese betragen etwa 25 bis 60 Sekunden, liegen, ergibt bereits eine Verkürzung der Wartezeiten auf 1 bis 2 Sekunden, im Falle der Verwendung von Auf-Zu-Ventilen, eine effektivere Ausnützung der Druckwechseladsorptionsanlage, da bei gleichbleibenden effektiven Taktzeiten eine Verkleinerung der Adsorber und/oder Rohrleitungen von bis zu 20 % möglich ist.

Zusammenfassend läßt sich feststellen, daß das erfindungsgemäße Druckwechseladsorptionsverfahren eine größere Betriebssicherheit aufweist und Einsparungen hinsichtlich Investitions- und Betriebskosten mit sich bringt.

## Patentansprüche

1. Druckwechseladsorptionsanlage zum Durchführen eines kontinuierlichen Druckwechseladsorptionsverfahrens, mit mindestens zwei phasenverschoben arbeitenden Adsorptionseinheiten, wobei jede Adsorptionseinheit abwechselnd in den Arbeitszuständen "Adsorption" und "Desorption" mit einer oder mehreren zwischengeschalteten Druckausgleichs- und/oder Spülphasen betrieben wird **dadurch gekennzeichnet,** daß jeder der Adsorptionseinheiten (A,...) ein eigenes Regelventil (RV), das in der zu den Druckausgleichs- und/oder Spülleitungen (4, 5,...) führenden Sammelleitung (9) angeordnet ist, zugeordnet ist, während diejenigen Ventile (V4, V5,...), die die Sammelleitung (9) mit den einzelnen Druckausgleichs- und/oder Spülleitungen (4, 5,...) verbinden, als sogenannte Auf-Zu-Ventile ausgelegt sind.

2. Druckwechseladsorptionsanlage nach Anspruch 1 **dadurch gekennzeichnet,** daß die mit einem Regelventil (RV) versehene Sammelleitung (9) am Ausgang der Adsorptionseinheit (A,...) angeordnet ist.

3. Druckwechseladsorptionsanlage nach Anspruch 1 oder 2 **dadurch gekennzeichnet,** daß parallel zu dem (RV) Regelventil ein Reserveregelventil (RV') angeordnet ist.

## Claims

1. Pressure-swing adsorption system for carrying out a continuous pressure-swing adsorption process having at least two adsorption units operating in a phase-shifted manner, each adsorption unit being operated alternately in the working states "adsorption" and "desorption" having one or more intermediate pressure-equilibration and/or purge pahses, characterized in that each of the adsorption units (A, ...) is allocated a separate control valve (RV) which is arranged in the collective line (9) leading to a pressure-equilibration and/or purge lines (4, 5, ...), while those valves (V4, V5, ...) which connect the collective line (9) to the individual pressure equilibration and/or purge lines (4, 5, ...) are designed as so-called on/off valves.

2. Pressure-swing adsorption system according to Claim 1, characterized in that the collective line (9) provided with a control valve (RV) is arranged at the outlet of the adsorption unit (A, ...).

3. Pressure-swing adsorption system according to Claim 1 or 2, characterized in that a back-up control valve (RV') is arranged in parallel to the (RV) control valve.

## Revendications

1. Dispositif d'adsorption à pression alternée pour la mise en oeuvre d'un procédé continu d'adsorption à pression alternée, avec au moins deux unités d'adsorption travaillant en décalage de phase, dans lequel chaque unité d'adsorption fonctionne alternativement dans les états opérationnels "adsorption" et "désorption" avec une ou plusieurs phases intermédiaires d'égalisation de pression et/ou de purge, caractérisé en ce qu'à chacune des unités d'adsorption (A, ...) est associée une vanne de régulation propre (RV), qui est disposée dans la conduite collectrice (9) menant aux conduites d'égalisation de pression et/ou de purge (4, 5, ...), tandis que les vannes (V4, V5, ...), qui relient la conduite collectrice (9) aux conduites individuelles d'égalisation de pression et/ou de purge (4, 5, ...), sont des vannes dites par tout ou rien.

2. Dispositif d'adsorption à pression alternée suivant la revendication 1, caractérisé en ce que la conduite collectrice (9) pourvue d'une vanne de régulation (RV) est disposée à la sortie de l'unité d'adsorption (A, ...).

3. Dispositif d'adsorption à pression alternée suivant la revendication 1 ou 2, caractérisé en ce qu'une vanne de régulation de réserve (RV') est disposée en parallèle avec la vanne de régulation (RV).
